# EUROPÄISCHE PATENTSCHRIFT

(11) **EP 0 281 890 B1**
(45) Veröffentlichungstag und Bekanntmachung des Hinweises auf die Patenterteilung: **13.07.1994**
(21) Anmeldenummer: 88103025.8
(22) Anmeldetag: 29.02.1988
(51) Int. Cl.: G06F 11/16, G06F 11/26

(54) **Sicherheitsschaltwerk mit mehreren dieselben Daten verarbeitenden Mikrocomputern**
Security circuit device with a plurality of microcomputers processing the same data
Circuit logique séquentiel de sécurité à plusieurs microprocesseurs travaillant sur des données identiques

(30) Priorität: 12.03.1987 DE 3708055
(43) Veröffentlichungstag der Anmeldung: 14.09.1988
(73) Patentinhaber: SIEMENS AKTIENGESELLSCHAFT, 80333 München (DE)
(72) Erfinder: Gronemeyer, Michael, D-3302 Cremlingen (DE)

(56) Entgegenhaltungen:
- EP-A- 0 077 450
- EP-A- 0 148 995
- DE-A- 2 217 634
- DE-A- 3 003 291

## Beschreibung

Die Erfindung bezieht sich auf ein Sicherheitsschaltwerk mit mehreren dieselben Daten verarbeitenden Mikrocomputern, an die mindestens ein Vergleicher zur Übereinstimmungsprüfung von durch die Mikrocomputer über Ausgangssignalumsetzer an einen zu steuernden Prozeß auszugebenden Informationen angeschlossen ist, wobei der Vergleicher bei festgestellter Informationsdivergenz ein die Ausgangssignalumsetzer über ein UND-Glied nur bei ordnungsgerechtem Betrieb aktivierendes Freigabesignal abschaltet.

Bei vielen modernen technischen Prozessen, beispielsweise bei der Steuerung von Kernreaktoren oder bei Eisenbahnsicherungsanlagen, wird seit vielen Jahren nach einem anerkannten sicherungstechnischen Prinzip gearbeitet, wodurch bei etwaigen technischen Fehlern, mit denen bei der Verwendung von nicht sicheren Datenverarbeitungsanlagen gerechnet werden muß, der zu steuernde Prozeß in einen für den Menschen und für das Material unbedenklichen Zustand überführt wird. Dies kann beispielsweise dadurch erreicht werden, daß allen prozeßaktivierenden Signalen ein hoher Signalpegel zugeordnet wird, der bei einer technischen Störung der Datenverarbeitungsanlage auf allen Ausgabekanälen abgeschaltet wird.

Ein Sicherheitsschaltwerk unter Verwendung von Mikrocomputern in der eingangs genannten Art, welches der oben erläuterten Sicherheitsphilosophie genügt, ist beispielsweise in der DE-A-30 03 291, besonders in der Fachzeitschrift "Elektronische Rechenanlagen", 22. Jahrgang, 1980, Heft 5, Seiten 229-236 näher beschrieben. Diese bekannten Sicherheitsschaltwerke sind aus zwei parallel dieselben Informationen verarbeitenden Mikrocomputern aufgebaut und werden so betrieben, daß nach einer festgestellten Ungleichheit beider Kanäle die Aktivitäten der Mikrocomputer direkt unterdrückt werden. Dies wird durch ein Zurückhalten der die beiden Mikroprozessoren treibenden Taktimpulse realisiert. Das bekannte zweikanalige 2v2-Sicherheitsschaltwerk erfüllt auch bereits die Forderung nach einer kurzen Defekt-Offenbarungszeit, und zwar zum einen dadurch, daß in ihm nach jedem Taktschritt die Zustände beider Computerzweige, also beider Kanäle, miteinander vergleichen werden; zum anderen sorgen spezielle Prüfprogramme für eine kurze, vom Prozeßdatenfluß unabhängige Defekt-Offenbarung. So ist es dann möglich, im Fehlerfall aufgrund der dann aussetzenden Taktsignale der Mikrocomputer und/oder auch aufgrund von abgeschalteten Versorgungsspannungen die Ausgangssignalumsetzer für alle Mikrocomputersignale undurchlässig zu schalten. Hierdurch werden Stellstromkreise, die aufgrund fehlerhafter Steuersignale Gefahr für Mensch und Material bringen könnten, stromlos.

Bei der zweikanaligen Datenverarbeitungsanordnung nach der DE-A-30 03 291 wird im Fehlerfall ein vom Vergleicher ausgegebenes Freigabesignal abgeschaltet. Dies hat zur Folge, daß ein dem Vergleicher nachgeschaltetes UND-Glied weitere ihm zugeführte informationslose Taktimpulse ebenfalls abschaltet.

Die bekannten Sicherheitsschaltwerke haben sich bisher in der Praxis bewährt. Voraussetzung für ihre Anwendung ist jedoch, daß die einzelnen Vergleicher zur Übereinstimmungsprüfung von durch die Mikrocomputer abgegebenen Informationen stets funktionsfähig sind. Die Funktionsfähigkeit der Vergleicher wird überprüft, indem den Vergleichern von Zeit zu Zeit absichtlich ungleiche Daten zugeführt werden. Die Vergleicher reagieren darauf mit dem Sperren der Freigabesignale für die nachgeschalteten UND-Glieder. Ihre Reaktion wird von den Mikrocomputern durch Rücklesen der Ausgangssignale der UND-Glieder detektiert und bewertet; im Fehlerfall soll es zu einem Abschalten des Rechnersystems kommen.

Wie das im einzelnen geschehen soll, ist in der DE-A-30 03 291 nicht offenbart. Mitunter ist es auch gar nicht erforderlich, im Fehlerfall das gesamte Rechnersystem abzuschalten; vielmehr kann es genügen, im Fehlerfall nur die Ausgabe sicherheitsrelevanter Informationen zu verhindern, die Ausgabe nicht sicherheitsrelevanter Informationen aber weiterhin zuzulassen, weil sie ja nicht zu einer Prozeßgefährdung führen können.

Auf jeden Fall ist es aber so, daß es zu einer sicheren Einflußnahme auf das Prozeßgeschehen nicht ausreicht, das Funktionsverhalten der Vergleicher zu überprüfen; vielmehr muß sichergestellt sein, daß das Schaltwerk im Fehlerfall auch in der Lage ist, in vorgegebener Weise auf den zu steuernden und/oder zu überwachenden Prozeß einzuwirken und damit in vorgegebener Weise auf den eingetretenen Fehler zu reagieren. Dies ist jedoch nur möglich, wenn sichergestellt ist, daß die bewertenden Mikrocomputer des Ausbleiben der Vergleicher-Freigabesignale sicher erkennen können und wenn sichergestellt ist, daß sie dann auch signaltechnisch sicher auf die Ausgabesignalumsetzer zum Prozeß hin einwirken können.

Aufgabe der Erfindung ist es, ein Sicherheitsschaltwerk der eingangs genannten Art dahingehend zu verbessern, daß mit der datenflußunabhängigen Funktionsprüfung des oder der Vergleicher auch eine Funktionsprüfung mindestens derjenigen Teile der Mikrocomputer und der an der Ansteuerung der Ausgabesignalumsetzer beteiligten Schaltmittel einhergeht, die an der möglichen Ausgabesperrung von Informationen im Fehlerfalle direkt beteiligt sind.

Erfindungsgemäß wird diese Aufgabe dadurch gelöst, daß jedes UND-Glied eingangsseitig außer mit dem zugehörigen Vergleicher mit dem Ausgang einer ein bistabiles Verhalten aufweisenden Testschaltung verbunden ist, die bei einem vom Mikrocomputer ausgegebenen und im Vergleicher wieder das Freigabesignal auslösenden Setzsignal ein Abschaltkennzeichen für den zugehörigen Ausgangssignalumsetzer ausgibt und die nach erfolgreicher Bewertung einer eine im Mikrocomputer abgelaufene vorgegebene Rechnerroutine quittierenden und in der Testschaltung als ordnungsgerecht erkannten Schlüsselinformation ein Einschaltkennzeichen für den zugehörigen Ausgangssignalumsetzer abgibt.

Der besondere Vorteil einer derartigen Maßnahme ist, daß wie gewünscht, die Vergleicher datenflußunabhängig auf einen etwaigen Fehler überprüft werden und daß aufgrund der eingeführten Rechnerroutine der Mikrocomputer mindestens teilweise ebenfalls in den Prüfvorgang mit einbezogen wird. Wenn es nämlich zur Ausgabe einer fehlerhaften Schlüsselinformation kommt, gibt die Testschaltung an das nachgeschaltete UND-Glied nach wie vor das Abschaltkennzeichen, wodurch ein dem UND-Glied unzulässig zugeführtes Freigabesignal unterdrückt wird.

In Weiterbildung des erfindungsgemäßen Sicherheitsschaltwerkes, welches vorzugsweise aus einem 2v2-System besteht, ist in vorteilhafter Weise vorgesehen, daß als Rechnerroutine ein Vergleicherprüfprogramm vorgesehen ist, in welchem der Vergleicher mindestens eine zu erkennende Informationsdivergenz und der Testschaltung mindestens eine fehlerhafte und danach eine ordnungsgerechte Schlüsselinformtion vorgegeben werden. Dabei kann die Schlüsselinformation aus einer durch den Mikrocomputer fest vorgegebenen Bitfolge bestehen. Dies setzt eine Testschaltung voraus, die eine Dekodierschaltung zum Erkennen der speziell kodierten Schlüsselinformationen enthält. Die Testschaltung gibt somit nur dann das Einschaltkennzeichen an das nachgeschaltete UND-Glied, wenn eine ordnungsgerechte Kodierung detektiert werden konnte.

Unabhängig von der o.g. Maßnahme oder aber auch zusätzlich ist es in Weiterbildung des erfindungsgemäßen Sicherheitsschaltwerkes von Vorteil, daß die Testschaltung eine durch jedes Setzsignal startbare Torschaltung enthält zum Prüfen, ob die Schlüsselinformation zeitgerecht ist.

Ausführungsbeispiele der Erfindung sind in der Zeichnung dargestellt und werden nachfolgend näher erläutert.

Es zeigen:
- Figur 1: ein Sicherheitsschaltwerk mit zwei dieselben Daten verarbeitenden Mikrocomputern in Verbindung mit überwachbaren Vergleichern,
- Figur 2: eine bevorzugte Ausführungsform einer jedem der Vergleicher zugeordneten Testschaltung zum Prüfen der Schlüsselinformationen im Hinblick auf zeitgerechte Lage und
- Figuren 3 bis 5: jeweils in mehreren Diagrammlinien Signalkonfigurationen an Meßpunkten der Schaltungsanordnung nach Figur 2.

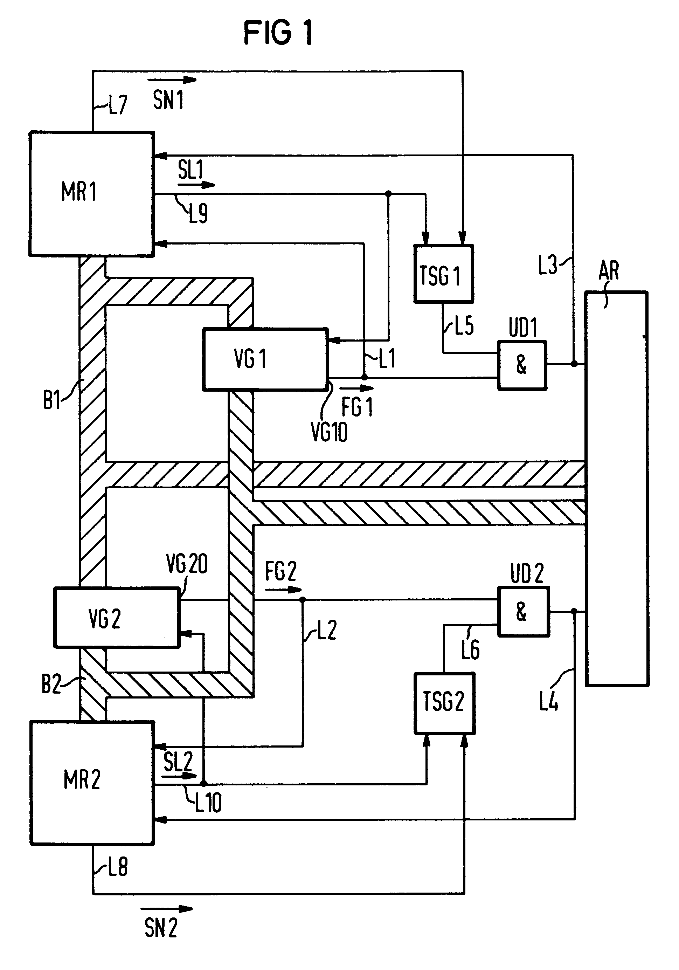

Das Blockschaltbild nach Figur 1 zeigt ein Sicherheitsschaltwerk mit zwei dieselben Daten verarbeitenden Mikrocomputern MR1 und MR2, die nach dem bekannten 2v2-System arbeiten. Da die Erläuterung des erfindungsgemäßen Sicherheitsschaltwerkes unabhängig ist von einem speziellen Prozeß, ist bei der Darstellung nur Wesentliches hervorgehoben und Unwesentliches fortgelassen worden. Hierzu gehören beispielsweise Leitungen oder Bussysteme zum Zuführen der durch die Mikrocomputer MR1 und MR2 zu verarbeitenden Daten. Beim Ausführungsbeispiel ist davon ausgegangen worden, daß ausschließlich diejenigen Daten der beiden Mikrocomputer MR1 und MR2 miteinander verglichen werden, die einen über Ausgangssignalumsetzer AR zu steuernden Prozeß (nicht dargestellt) zugeführt werden müssen. So sind für Übereinstimmungsprüfungen an die von den Mikrocomputern MR1 und MR2 ausgehenden Busse B1 und B2 zwei Vergleicher VG1 und VG2 angeschlossen. Grundsätzlich wäre es natürlich möglich, weitere Vergleicher vorzusehen, die zur Übereinstimmungsprüfung von Steuersignalen dienen könnten, die von den beiden Mikrocomputern MR1 und MR2 ausgehen. Die Busse B1 und B2 sind zusätzlich mit den Ausgangssignalumsetzern AR verbunden. Die Vergleicher VG1 und VG2 sind so aufgebaut, daß sie über ihren jeweiligen Ausgang VG10 bzw. VG20 ein Freigabesignal FG1 bzw. FG2 an ein nachgeschaltetes UND-Glied UD1 bzw. UD2 abgeben können. Solange die UND-Glieder über den jeweils anderen Eingang ein Einschaltkennzeichen erhalten, wird das Freigabesignal FG1 bzw. FG2 auf die Ausgangssignalumsetzer AR übertragen. Diese sind in bekannter Weise so aufgebaut, daß sie die über die Busse B1 und B2 zugeführten Daten nur dann ausgeben, wenn die beiden UND-Glieder UD1 und UD2 die zugeführten Freigabesignale FG1 und FG2 durchschalten. Sobald einer der beiden Vergleicher VG1 bzw. VG2 aufgrund einer festgestellten Informationsdivergenz der auf den beiden Bussen B1 und B2 zugeführten Informationen feststellt, entfällt mindestens eines der beiden Freigabesignale FG1 bzw. FG2; in der Regel werden jedoch - da der besagte Fehler mit Sicherheit von beiden Vergleichern VG1 und VG2 festgestellt wird - beide Freigabesignale FG1 und FG2 abgeschaltet. Dann sind die Ausgangssignalumsetzer AR für jegliche Datenausgabe an den zu steuernden Prozeß gesperrt.

Um die Vergleicher VG1 und VG2 datenflußunabhängig auf etwaige Ausfälle überprüfen zu können, sind folgende Maßnahmen vorgesehen:
Der Ausgang VG10 bzw. VG20 des Vergleichers VG1 bzw. VG2 ist über eine Leitung L1 bzw. L2 mit dem zugehörigen Mikrocomputer MR1 bzw. MR2 verbunden. Hierdurch kann seitens der Mikrocomputer festgestellt werden, ob der jeweilige Vergleicher VG1 bzw. VG2 das Freigabesignal FG1 bzw. der andere Vergleicher VG2 das Freigabesignal FG2 ausgibt. Des weiteren ist das UND-Glied UD1 bzw. UD2 ausgangsseitig mit Hilfe einer Leitung L3 bzw. L4 mit dem zugeordneten Mikrocomputer MR1 bzw. MR2 verbunden. Durch diese Maßnahme kann der jeweilige Mikrocomputer MR1 bzw. MR2 feststellen, ob den Ausgangssignalumsetzern AR das Freigabesignal FG1 bzw. FG2 zugeführt wird oder nicht.

Ferner ist zur Betätigung des UND-Gliedes UD1 bzw. UD2 eine Testschaltung TSG1 bzw. TSG2 vorgesehen, die ausgangsseitig über eine Leitung L5 bzw. L6 mit einem Eingang des UND-Gliedes UD1 bzw. UD2 verbunden ist. Die Testschaltungen TSG1 und TSG2 haben im Endeffekt ein bistabiles Verhalten; sie geben im einen Schaltzustand ein Abschaltkennzeichen und im anderen Schaltzustand ein Einschaltkennzeichen über die Leitung L5 bzw. L6 ab. Die Testschaltungen TSG1 und TSG2 haben jeweils die Aufgabe, eine über die Leitung L7 bzw. L8 vom Mikrocomputer MR1 bzw. MR2 ausgegebene Schlüsselinformation SN1 bzw. SN2 beispielsweise im Hinblick auf eine ordnungsgerechte Zeitlage zu überprüfen. Wird die Zeitlage der jeweiligen Schlüsselinformation SN1 bzw. SN2 als ordnungsgerecht bestätigt, gibt die erkennende Testschaltung TSG1 bzw. TSG2 über die Leitung L5 bzw. L6 das Einschaltkennzeichen an das betreffende UND-Glied UD1 bzw. UD2 ab. Umgeschaltet wird die Testschaltung TSG1 bzw. TSG2 zur Ausgabe des Abschaltkennzeichens durch ein vom Mikrocomputer MR1 bzw. MR2 über eine sich verzweigende Ausgangsleitung L9 bzw. L10 abgegebenes Setzsignal SL1 bzw. SL2. Diese Setzsignale gelangen auch auf den Vergleicher VG1 bzw. VG2 und veranlassen dabei - besonders nach einem vorhergegangenen Abschaltvorgang - wieder die Ausgabe des Freigabesignals FG1 bzw. FG2.

Zum Auslösen von Prüfvorgängen im Hinblick auf die Vergleicher VG1 und VG2 sind für die Mikrocomputer MR1 und MR2 spezielle Rechnerroutinen vorgesehen, die ein Vergleicherprüfprogramm beinhalten. Diese bzw. die gesamten zugehörigen Rechnerroutinen sind zeitlich so kurz, daß der zu steuernde Prozeß in keiner Weise beeinträchtigt wird. Das hängt beispielsweise mit Relais (nicht weiter dargestellt) zusammen, die im Zusammenhang mit den Ausgangssignalumsetzern AR zur Ausgabe von Steuerdaten an den Prozeß eingesetzt werden. Derartige Relais sind in ihrem Abfallverhalten so träge, daß sie bei kurzzeitigen Unterbrechungen in deren Ansteuerung während des Ablaufs der obengenannten Rechnerroutinen nicht abfallen. Sobald in den Mikrocomputern MR1 und MR2 die Rechnerroutinen mit dem Vergleicherprüfprogramm ablaufen, erhalten die Vergleicher VG1 und VG2 über die Busse B1 und B2 Datentelegramme, die mindestens an einer Bitstelle unterschiedlich sind. Aufgrund einer derartigen Informationsdivergenz müssen beide Vergleicher VG1 und VG2 ihre Freigabesignale FG1 und FG2 abschalten. Da die nachfolgenden Schaltvorgänge in beiden Kanälen des Sicherheitsschaltwerkes übereinstimmend ablaufen, werden sie der Einfachheit halber nur im Hinblick auf den Mikrocomputer MR1, den Vergleicher VG1 und die Testschaltung TSG1 in Verbindung mit dem UND-Glied UD1 näher erläutert. Den Fortfall des Freigabesignals FG1 erkennt der Mikrocomputer MR1 und kann daraus schließen, daß der Vergleicher VG1 noch betriebstüchtig ist. Nun geben die Mikrocomputer MR1 und MR2 wieder übereinstimmende Datentelegramme auf ihre Busse B1 und B2. Sodann löst der Mikrocomputer MR1 über die Ausgangsleitung L9 das Setzsignal SL1 aus, welches beim Vergleicher VG1 das Freigabesignal FG1 zur Folge hat. Dasselbe Setzsignal SL1 bringt die Testschaltung TSG1 in eine Schaltlage, bei welcher über die Leitung L5 das Abschaltkennzeichen ausgegeben wird. Mit anderen Worten, das Kennzeichen auf der Leitung L5 wechselt von H nach L. Hierdurch wird das nun wieder vorliegende Freigabesignal FG1 vom UND-Glied UD1 gesperrt und nicht an die Ausgangssignalumsetzer AR weitergegeben. Diese Tatsache wird dem Mikrocomputer MR1 über die Leitung L3 gemeldet. Zusätzlich wird über die Leitung L1 das Vorhandensein des Freigabesignals FG1 gemeldet. Nun folgt im Vergleicherprüfprogramm des Mikrocomputers MR1 die Ausgabe einer fehlerhaften Schlüsselinformation SN1 an die Testschaltung TSG1. Diese erkennt die Fehlerhaftigkeit der Schlüsselinformation SN1 und bleibt daher in der bestehenden Schaltlage, bei welcher über die Leitung L5 das Abschaltkennzeichen ausgegeben wird. Der Mikrocomputer MR1 fragt sodann die Information auf der Leitung L3 ab und erwartet dort bei ordnungsgerechtem Betrieb immer noch kein Freigabesignal FG1. Trotzdem wird noch ein weiteres Setzsignal SL1 ausgegeben, welches die Testschaltung TSG1 bei vorangegangenem etwaigen fehlerhaften Arbeiten wieder in diejenige Schaltlage gebracht hätte, bei welcher über die Leitung L5 das Abschaltkennzeichen ausgegeben wird. In Fortführung des laufenden Vergleicherprüfprogrammes gibt der Mikrocomputer MR1 sodann über die Leitung L7 eine ordnungsgerechte Schlüsselinformation SN1 aus, welche die Testschaltung TSG1 nach erfolgter dortiger Bewertung auf Kodierung und/oder zeitliche Lage in die andere Schaltlage steuert, bei welcher über die Leitung L5 das Einschaltkennzeichen ausgegeben wird. Dann erst gelangt das immer noch vorhandene Freigabesignal FG1 über das UND-Glied UD1 an die Ausgangssignalumsetzer AR. Damit ist das Vergleicherprüfprogramm abgearbeitet, und der zwischenzeitlich unterbrochene Normalbetrieb kann fortgesetzt werden.

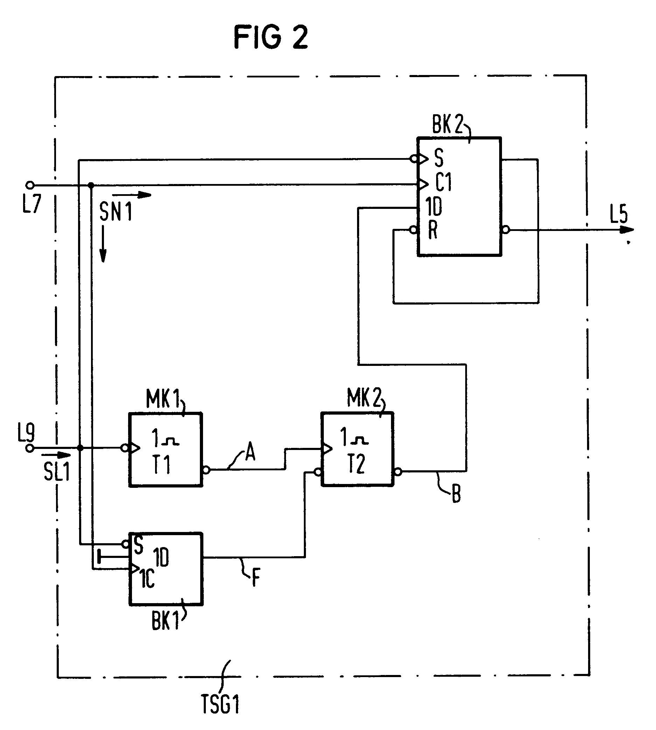

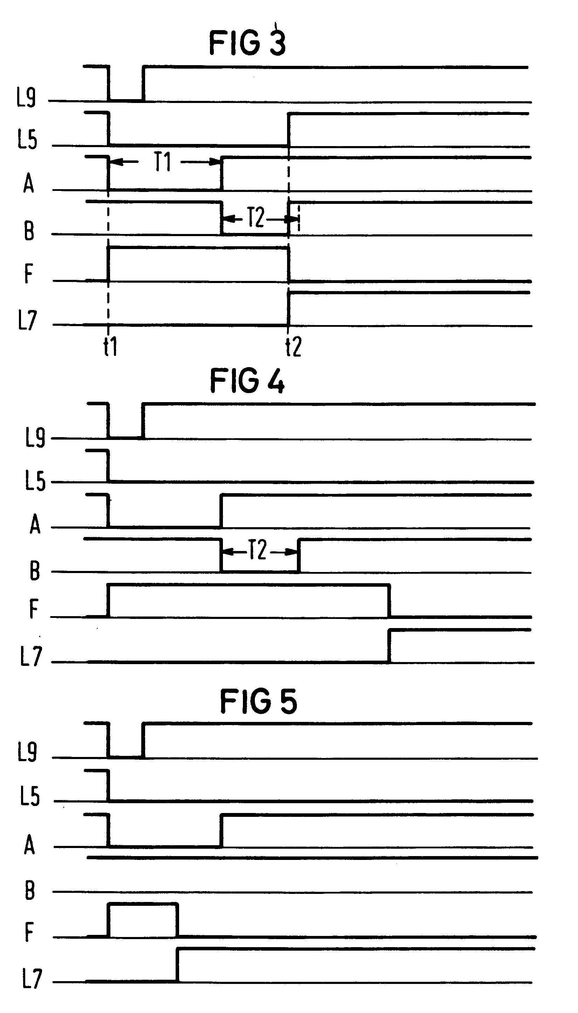

Die Schaltungsanordnung nach Figur 2 zeigt nähere Einzelheiten einer Testschaltung, wie sie im Blockschaltbild nach Figur 1 mit TSG1 bezeichnet ist. Die Eingangsleitungen und die Ausgangsleitung tragen die bisher verwendeten Bezugszei-ten L7, L9 und L5. Die Testschaltung nach Figur 2 hat die Aufgabe zu prüfen, ob eine über die Leitung L7 zugeführte Schlüsselinformation SN1 innerhalb eines Vergleicherprüfprogramms des Mikrocomputers MR1 eine ordnungsgerechte Zeitlage hat.
Die Testschaltung TSG1 nach Figur 2 besteht aus zwei monostabilen Kippgliedern MK1 und MK2. Die Rückfallzeit T2 aus der instabilen Lage des Kippgliedes MK2 ist wesentlich geringer als die Rückfallzeit T1 des Kippgliedes MK1. Das monostabile Kippglied MK2 ist vor Ablauf der Rückfallzeit T2 durch ein bistabiles Kippglied BK1 rückstellbar. Ferner ist ein zweites bistabiles Kippglied BK2 vorgesehen, an welches ausgangsseitig die Leitung L5 angeschlossen ist. Beide bistabile Schaltglieder BK1 und BK2 werden bei einem über die Leitung L9 zugeführten Setzsignal SL1 aus der bestehenden in die andere Schaltlage gesteuert. Nähere Einzelheiten zeigen verschiedene Diagrammlinien in Figur 3. Die Bezugszeichen der einzelnen Diagrammlinien sind übereinstimmend in allen drei Figuren 3, 4 und 5 sowie mit denjenigen an verschiedenen Ein- und Ausgangsleitungen der Testschaltung TSG1 nach Figur 2.

Wie anhand der Schaltungsanordnung nach Figur 1 bereits erläutert wurde, gibt der Mikrocomputer MR1 im Rahmen eines Vergleicherprüfprogrammes das Setzsignal SL1 ab; dies möge zum Zeitpunkt t1 erfolgen. Nach diesem Zeitpunkt befindet sich das monostabile Kippglied MK1 in der instabilen und das monostabile Kippglied MK2 noch in der stabilen Lage. Das Schaltglied BK1 gibt hohes Potential über die Leitung F aus, und die Leitung L5 des Schaltgliedes BK2 führt tiefes Potential und damit das Abschaltkennzeichen. Nach Ablauf der Rückfallzeit T1 des monostabilen Kippgliedes MK1 führt der Potentialwechsel auf der Leitung A zum Einstellen der instabilen Lage beim monostabilen Kippglied MK2. Die Rückfallzeit T2 dieses Kippgliedes MK2 bestimmt in seiner Dauer - vgl. Diagrammlinie B - ein Zeitfenster, währenddessen bei ordnungsgerechtem Betrieb des Mikrocomputers MR1 die nächste Schlüsselinformation SN1 vorliegen muß. Sie erscheint auf der Leitung L7 zum Zeitpunkt t2 in ordnungsgerechter Zeitlage - T2 ist noch nicht abgelaufen!-und setzt das bistabile Kippglied BK2 in die andere stabile Lage, so daß über die Leitung L5 wieder das Einschaltkennzeichen abgegeben wird. Andererseits wird das bistabile Kippglied BK1 umgesteuert, so daß über die Leitung F das monostabile Kippglied MK2 vor Ablauf der Rückfallzeit T2 wieder in die stabile Lage rückversetzt wird.

Die Diagrammlinien in Figur 4 zeigen ein Arbeitsbeispiel der Testschaltung nach Figur 2, bei welchem die Schlüsselinformation SN1 nicht in dem durch das monostabile Kippglied MK2 vorgegebenen Zeitfenster erscheint, sondern später nach Ablauf von T2. Die Folge ist, daß über die Leitung L5 nach dieser verspäteten Schlüsselinformation SN1 nach wie vor das Abschaltkennzeichen und nicht das Einschaltkennzeichen ausgegeben wird. Damit bleiben die Ausgangssignalumsetzer AR abgeschaltet.

Bei einem anderen Arbeitsbeispiel ist angenommen worden, daß die Schlüsselinformation SN1 außerhalb des durch T2 vorgegebenen Zeitfensters vorzeitig auf der Leitung L7 erscheint, wobei sich das monostabile Kippglied MK2 noch nicht in der instabilen Lage befindet. Dies ist in den Diagrammlinien nach Figur 5 näher veranschaulicht. Auch nach diesem Testfall bleiben die Ausgangssignalumsetzer AR abgeschaltet.

Die erfindungsgemäße Schaltung ist in vorteilhafter Weise auch bei nvm-Schaltwerken einsetzbar.

## Patentansprüche

1. Sicherheitsschaltwerk mit mehreren dieselben Daten verarbeitenden Mikrocomputer (MR1, MR2), an die mindestens ein Vergleicher (VG1, VG2) zur Übereinstimmungsprüfung von durch die Mikrocomputer über Ausgangssignalumsetzer (AR) an einen zu steuernden Prozeß auszugebenden Informationen angeschlossen ist, wobei jeder Vergleicher (VG1, VG2) bei festgestellter Informationsdivergenz ein die Ausgangssignalumsetzer (AR) über ein zugehöriges UND-Glied (UD1, UD2) nur bei ordnungsgerechtem Betrieb aktivierendes Freigabesignal (FG1, FG2) abschaltet, und wobei jeder Vergleicher (VG1, VG2) datenflußunabhängig auf etwaige Fehler überprübar ist, indem ihm absichtlich ungleiche Daten zugeführt und seine Reaktionen hierauf durch die Mikrocomputer (MR1, MR2) detektiert und bewertet werden,
**dadurch gekennzeichnet,**
daß jedes UND-Glied (z.B. UD1) eingangsseitig außer mit dem zugehörigen Vergleicher (VG1) mit dem Ausgang einer ein bistabiles Verhalten aufweisenden Testschaltung (TSG1) verbunden ist, die bei einem vom Mikrocomputer (MR1) ausgegebenen und im Vergleicher (VG1) wieder das Freigabesignal (FG1) auslösenden Setzsignal (SL1) ein Abschaltkennzeichen für den zugehörigen Ausgangssignalumsetzer ausgibt, und die nach erfolgreicher Bewertung einer eine im Mikrocomputer (MR1) abgelaufene vorgegebene Rechnerroutine quittierenden und in der Testschaltung (TSG1) als ordnungsgerecht erkannten Schlüsselinformation (SN1) ein Einschaltkennzeichen für den zugehörigen Ausgangssignalumsetzer abgibt.

2. Sicherheitsschaltwerk nach Anspruch 1, **dadurch gekennzeichnet,** daß als Rechnerroutine ein Vergleicherprüfprogramm vorgesehen ist, in welchem dem Vergleicher (VG1) mindestens eine zu erkennende Informationsdivergenz und der Testschaltung (TSG1) mindestens eine fehlerhafte und danach eine ordnungsgerechte Schlüsselinformation (SN1) vorgegeben werden.

3. Sicherheitsschaltwerk nach Anspruch 2, **dadurch gekennzeichnet,** daß die Testschaltung (TSG1) eine Dekodierschaltung zum Erkennen der Schlüsselinformationen enthält.

4. Sicherheitsschaltwerk nach Anspruch 2 oder 3, **dadurch gekennzeichnet,** daß die Testschaltung (TSG1) eine durch jedes Setzsignal (SL1) startbare Torschaltung (MK1, MK2, BK1, BK2 in Fig. 2) enthält zum Prüfen, ob die Schlüsselinformation (SL1) zeitgerecht ist.

## Claims

1. Security circuit device with a plurality of microcomputers (MR1, MR2) processing the same data, to which microcomputers there is attached at least one comparator (VG1, VG2) to examine the conformity of information to be issued by the microcomputers by way of output signal converters (AR) to a process to be controlled, with each comparator (VG1, VG2) disconnecting a release signal (FG1, FG2) activating the output signal converters (AR) by way of an appertaining AND-element (UD1, UD2) only with proper operation having established information divergence, and with each comparator (VG1, VG2) being capable of being examined for possible faults independently of the data flow, in that different data are supplied to it on purpose and its reactions thereto are detected and evaluated by the microcomputers (MR1, MR2), characterized in that each AND-element (e.g. UD1) is connected on the input side, apart from to the appertaining comparator (VG1), to the output of a test circuit (TSG1) having a bistable behaviour, which circuit issues a disconnection characteristic for the appertaining output signal converter with a setting signal (SL1) issued by the microcomputer (MR1) and triggering the release signal (FG1) in the comparator (VG1) again, and which emits a connection characteristic for the appertaining output signal converter after successful evaluation of key information (SN1) accepting a specified computer routine run in the microcomputer (MR1) and recognized in the test circuit (TSG1) as proper.

2. Security circuit device according to claim 1, characterized in that a comparator test program is provided as a computer routine, in which program there are specified for the comparator (VG1) at least one information divergence to be recognized and for the test circuit (TSG1) at least one set of faulty information and thereafter a set of proper key information (SN1).

3. Security circuit device according to claim 2, characterized in that the test circuit (TSG1) contains a decoding circuit for recognizing the key information.

4. Security circuit device according to claim 2 or 3, characterized in that the test circuit (TSG1) contains a gate circuit (MK1, MK2, BK1, BK2 in Figure 2), which can be started by each setting signal (SL1), to test whether the key information (SL1) is current.

## Revendications

1. Unité de commutation de sécurité comportant des micro-ordinateurs (MR1, MR2) traitant les mêmes données et auxquels est raccordé un comparateur (VG1, VG2) servant à contrôler la coïncidence d'informations qui doivent être délivrées par les micro-ordinateurs, par l'intermédiaire de convertisseurs (AR) des signaux de sortie, à un processus devant être commandé, et dans lequel, pour une divergence établie entre les informations, chaque comparateur (VG1, VG2) interrompt un signal d'autorisation (FG1, FG2), qui active le convertisseur de signaux de sortie (AR) par l'intermédiaire d'un circuit ET associé (UD1, UD2), uniquement dans le cas d'un fonctionnement correct, et dans lequel d'éventuelles erreurs peuvent être contrôlées dans chaque comparateur (VG1, VG2) indépendamment du flux de données, par le fait que des données délibérément différentes lui sont envoyées et que ses réactions à ces données sont détectées et évaluées au moyen des micro-ordinateurs (MR1, MR2),
caractérisée par le fait que chaque circuit ET (par exemple UD1) est relié, côté entrée, non seulement au comparateur associé (VG1), mais également à la sortie d'un circuit de test (TSG1) qui possède un comportement bistable et qui, dans le cas de la délivrance, par le micro-ordinateur (MR), d'un signal de positionnement (SL1) qui déclenche à nouveau dans le comparateur (VG1) le signal d'autorisation (FG1), délivre un signal caractéristique d'interruption pour le convertisseur associé de signaux de sortie, et qui, une fois réalisée l'évaluation d'une information de code (SN1), qui accuse réception d'un sous-programme de calcul prédéterminé exécuté dans le micro-ordinateur (MR1), est identifiée comme correcte dans le circuit de test (TSG1), délivre un signal caractéristique de branchement pour le convertisseur associé de signaux de sortie.

2. Unité de commutation de sécurité suivant la revendication 1, caractérisée par le fait qu'il est prévu, en tant que sous-programme de calcul, un programme de contrôle des comparateurs, selon lequel au moins un écart d'informations, qui doit être identifié, est envoyé au comparateur (VG1) et qu'au moins une information de code détectueuse (SN1), puis une information de code (SN1) correcte sont envoyées au circuit de test (TSG1).

3. Unité de commutation de sécurité suivant la revendication 2, caractérisée par le fait que le circuit de test (TSG1) comporte un circuit de décodage servant à identifier l'information de code.

4. Circuit de commutation de sécurité suivant la revendication 2 ou 3, caractérisé par le fait que le circuit de test (TSG1) comporte un circuit de porte (MK1, MK2, BK1, BK2 sur la figure 2), qui peut être déclenché au moyen de chaque signal de positionnement (SL1) et qui sert à vérifier si l'information de code (SL1) est correcte dans le temps.
